# EUROPEAN PATENT SPECIFICATION

(11) **EP 0 958 963 B1**
(45) Date of publication and mention of the grant of the patent: **27.08.2003**
(21) Application number: 99109702.3
(22) Date of filing: 17.05.1999
(51) Int. Cl.: B60R 11/00

(54) **An instrument holder device that can be mounted on a vehicle**
Instrumenttragvorrichtung zur Montage an einem Fahrzeug
Dispositif support d'instrument installable sur un véhicule

(30) Priority: 22.05.1998 IT TO980441
(43) Date of publication of application: 24.11.1999
(73) Proprietor: IVECO FIAT S.p.A., 10156 Torino (IT)
(72) Inventor: Giannini, Giovanni, 10147 Torino (IT); Varalda, Orlando, 10151 Torino (IT)
(74) Representative: Jorio, Paolo

(56) References cited:
- DE-U- 8 436 057
- US-A- 2 219 169
- US-A- 4 247 144
- US-A- 4 564 167
- US-A- 4 971 234
- PATENT ABSTRACTS OF JAPAN vol. 013, no. 206 (M-826), 16 May 1989 (1989-05-16) & JP 01 030855 A (ASAHI DENKI SEISAKUSHO:KK), 1 February 1989 (1989-02-01)

## Description

The present invention relates to an instrument holder device that can be mounted on a vehicle and to a vehicle provided with an instrument holder device.

Instruments for vehicle (for instance industrial vehicle) diagnosis are in particular known and comprise a housing containing a plurality of electronic circuits and provided with a control panel which bears display devices (for instance liquid crystal display devices), connection devices (for instance connectors) and regulation and monitoring devices (for instance keyboards).

These diagnostic instruments are generally of non-negligible weight (normally in the range of some tens of kg) and are normally transported by garage vehicles that are used to monitor and maintain other vehicles. In order to use these diagnostic instruments, it is therefore necessary to unload the instrument from the garage vehicle and manually position it in the vicinity of the vehicle in a position in which an interconnection can readily be made with the vehicle to be diagnosed and at the same time providing ready access to the control panel. Manual operations to position the instrument are extremely problematic because of the non-negligible weight of the instrument itself, and because supports (for instance a table) have to be used for the positioning of the instrument.

Document DE-U-84 36 057 describe pivotable storage unit according to the preamble of claim 1 for vehicles wherein a carring member is rotable about at least one vertical axis.

The object of the present invention is to provide an instrument holder device which allows an instrument, in particular a diagnostic instrument, to be readily and conveniently disposed with respect to a vehicle bearing this instrument.

This object is achieved by the features of claim 1.

The invention will now be described with reference to the accompanying drawings, which show a non-limiting embodiment thereof and in which:
Fig. 1 is a perspective view of a front portion of a vehicle provided with an instrument holder device of the present invention;
Fig. 2 is a lateral view of a portion of the vehicle of Fig. 1;
Fig. 3 shows a detail of the instrument holder device of the present invention;
Fig. 4 shows some parts of the detail of Fig. 3 on an enlarged scale.

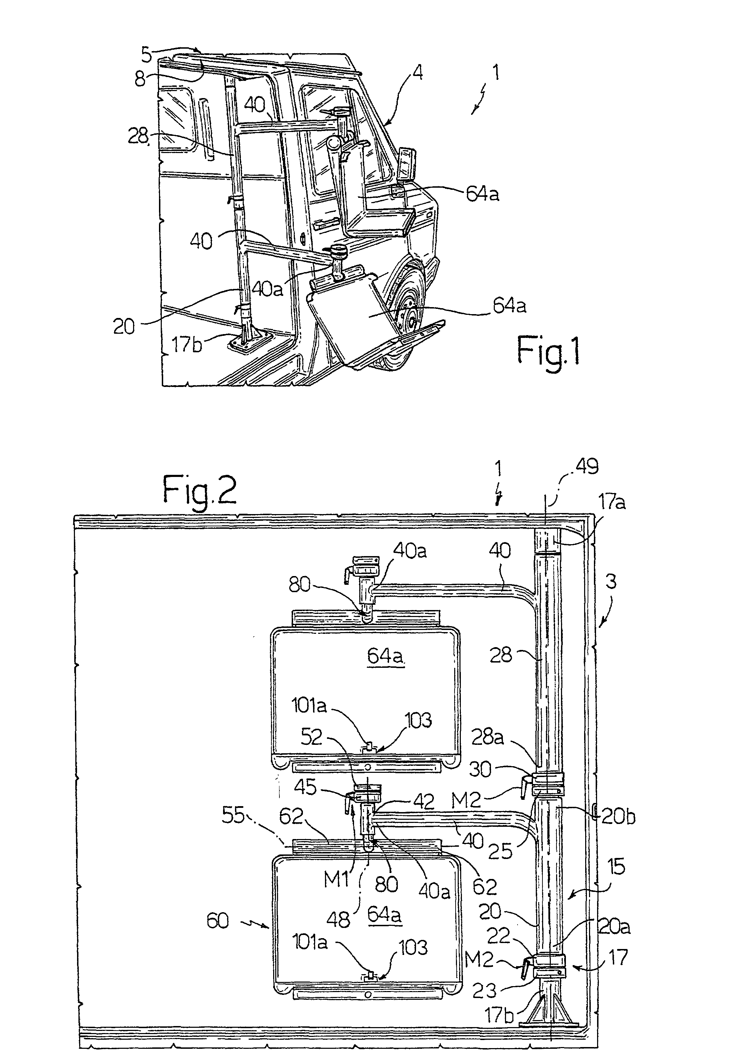

In Fig. 1, a garage vehicle provided with an instrument holder device 3 of the present invention is shown overall by 1.

The garage vehicle 1 comprises a driving cabin 4 and a rear loading bay 5 which communicates externally via a lateral opening 8 of substantially rectangular shape and a rear opening (not shown) also of rectangular shape.

The lateral opening 8 is adapted to be closed by a sliding door (not shown) while the rear opening is adapted to be closed by a door comprising a first and a second leaf (not shown).

The instrument holder device comprises a first support means in form of a vertical support 15 in which a rectilinear cylindrical member 17 extends parallel to a vertical edge of the lateral opening 8 and has widened end portions 17a, 17b fixed respectively to a base portion and a top portion of the bodywork bounding the loading bay 5.

The vertical support 15 comprises a first lower rectilinear tubular member 20 mounted coaxially with respect to the member 17 and moving angularly with respect thereto. The tubular member 20 in particular has a lower portion 20a provided with an annular collar 22 which bears on an annular collar 23 of the rectilinear member 17 and an upper portion 20b provided with the annular collar 25.

The vertical support 15 comprises a second upper rectilinear tubular member 28 mounted coaxially with respect to the member 17 and moving angularly with respect thereto. The tubular member 28 in particular comprises a lower portion 28a provided with an annular collar 30 which bears and is free to rotate on the annular collar 25 of the lower tubular member 20.

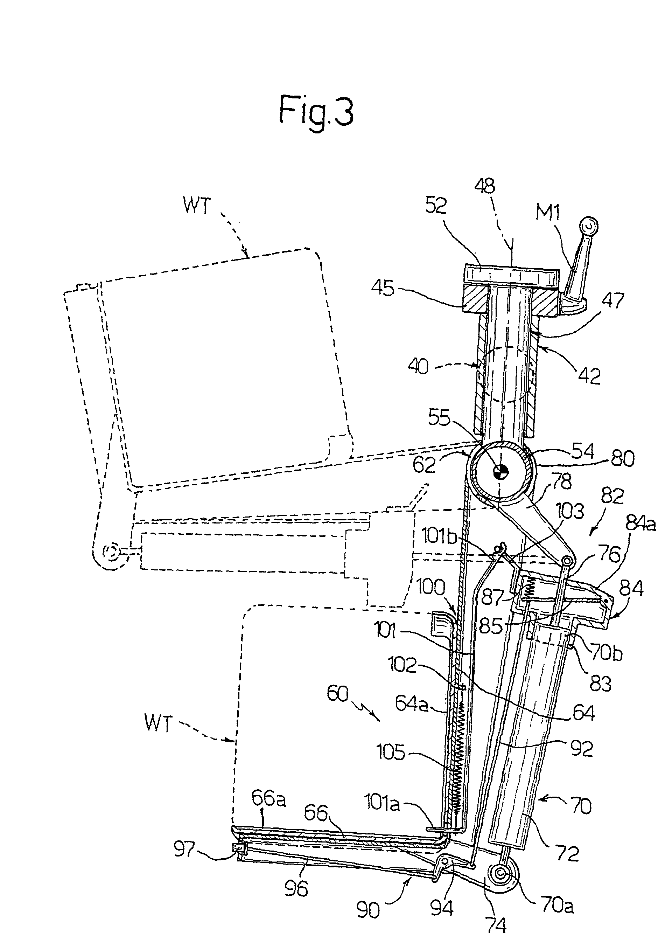

The device 3 further comprises a rectilinear arm 40 which extends perpendicularly to the tubular member 20 and comprises an end portion 40a remote from the member 20 and supporting a rectilinear tubular member 42 disposed parallel to the member 20 and much shorter in length than the latter. The rectilinear tubular member 42 (Fig. 3) has an upper end from which an annular flange 45 extends and bears internally a cylindrical member 47 that can move angularly about its axis of rotation 48 with respect to the cylindrical member 47. The axis of rotation 48 is further disposed substantially vertically and parallel to the axis of rotation 49 of the tubular members 20 and 28.

The cylindrical member 47 (Fig. 3) has an upper end that projects from the tubular member 42 and that is rigid with a disk member 52 having edges bearing on the annular flange 45. The cylindrical member 47 has a lower end that projects from the tubular member 42 and that is connected in a stable manner with a central portion of a rectilinear tubular member 54 perpendicular to the member 42 and coaxial with an axis 55 perpendicular to the axis 48. The tubular member 54 bears a support device 60 comprising a tubular member 62 fitted on the tubular member 54 and moving angularly with respect to the latter about the axis 55, a second support means consisting of a plane rectangular wall 64 extending tangentially from the tubular member 62 and a plane rectangular wall 66 perpendicular to the wall 64.

The rectangular walls 64 and 66 (made from metal) are adjacent and covered by respective beads 64a, 66a, made from plastic material, connected together along respective adjacent peripheral edges and each comprising a plane rectangular portion having raised free peripheral edges.

The support device 60 further comprises a shock absorbing device 70 comprising a gas shock absorber 72 which has a first end 70a hinged on a flange 74 which extends at the rear from the zone of connection of the walls 64 and 66 and a second end 70b from which there extends a spindle 76 hinged on a triangular projection 78 which extends radially from the tubular member 54 via a radial slot 80 provided through the tubular member 62 through which the cylindrical member 47 also passes.

The second end 70b of the shock absorber 70 bears a hollow member 82 comprising a tubular collar 83 secured to the end 70b and a box member 84 having a wall 84a provided with a hole for the passage of the spindle 76.

The box member 84 internally bears a plane rectangular plate 85 having a first end portion hinged on the wall 84a, a second end portion coupled to a spring 87 interposed between the wall 84a and the plate 85 and adapted to move the plate 85 away from the wall 84a and a central portion having a through hole 89 engaged by the spindle 76.

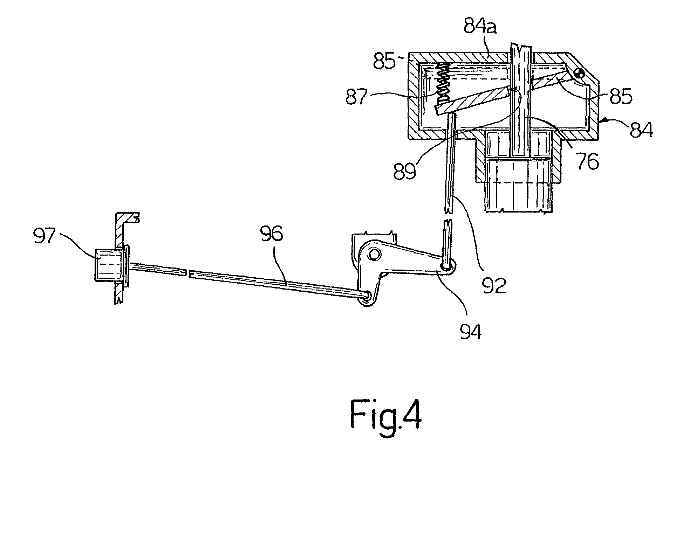

The plate 85 can move, under the thrust of a control device 90, between a locking position (shown in Fig. 4 in solid lines) in which it is inclined with respect to the spindle 76 with which it engages and a moving position (shown in Fig. 4 in dashed lines) in which the plate 85 is perpendicular to the spindle 76 which can slide freely within the hole 89.

The control device 90 comprises (Figs. 3 and 4) a first rectilinear rod 92 having a first end disposed adjacent to the second end portion of the plate 85 and a second end hinged on a first arm of an L-shaped member 94 having a central portion hinged on the flange 74. The control device 90 comprises a second rectilinear rod 96 having a first end hinged on a second arm of the L-shaped member 94 and a second end connected to a push-button 97 borne by the wall 66. When the push-button 97 is depressed, the plate 85 is moved, via the transmission provided by the rods 92 and 96 and the L-shaped member 94, from the locking position to the moving position described above (Fig. 4); this enables the spindle 76 to move with respect to the box member 84 in opposite directions (i.e. retracted towards the shock absorber 72 and extended away from the shock absorber 72) and therefore the axial movement of the spindle 76 and the rotation of the tubular member 62 about the axis 55 in opposite angular directions (clockwise and anticlockwise).

When the push-button 97 is released, the spring 87 brings the plate 85 back into the locking position thereby preventing the axial movement of the spindle 76 retracting it towards the shock absorber 72 and the rotation of the tubular member 62 about the axis 55 in a anticlockwise direction of rotation. This makes it impossible for the support device 60 to rotate in an anticlockwise direction and prevents the free movement of the wall 66 from a higher to a lower position, while the clockwise rotation of the support device 60 and the movement of the wall 66 from a lower to a higher position is still possible.

The support device 60 further comprises a locking device 100 comprising a plate 101 disposed adjacent and parallel to the wall 64 and having a first bent end 101a which passes through the wall 64 and the bead 64a via an aperture 103 (Fig. 2) projecting from the bead 64a in the vicinity of the zone of connection of the beads 64a and 65a. The plate 101 has a second end portion 101b bent towards the shock absorber device 70 and provided with a hooking device adapted to be coupled, in a rest position of the support device 60, with a projection 103 which extends from the box member 84 towards the wall 64. The locking device 100 lastly comprises a spring 105 extending parallel to the wall 64 between the portion 101a of the plate 101 and a pin 102 secured to the wall 64. The plate 101 can move between a high position, in which it is maintained by the thrust of the spring 105, as a result of which the end 101b is coupled with the projection 103 making it impossible for the spindle 76 to move axially (in any direction) and for the tubular member 62 to rotate about the axis 55 (in both the clockwise and anticlockwise directions), and a low position, in which it is held by the action of the spring 105 and in which the end 101b is disengaged from the projection 103 enabling the axial sliding of the spindle 76 and the rotation of the tubular body 62 about the axis 55.

The second tubular member 28 bears a rectilinear arm having the same structure as the arm 40 and bearing the same parts and the same members as described above. The description of these parts and members is not repeated, for the sake of brevity, and identical or corresponding parts are given the same reference numerals in the accompanying drawings.

In this way, the vertical support 15 bears two support devices 60, although the vertical support device 15 could obviously also bear a single support device or more than two support devices.

In operation, a diagnostic instrument for vehicles WT of parallelepipedic shape is supported on the support device 60 disposed in the rest position in which the projection 103 is coupled to the plate 101; the base of the diagnostic instrument WT bears on the bead 66a, while a corner portion of the instrument WT is coupled with the end 101a which, under the weight of the instrument, is moved from the high to the low position thereby enabling the tubular member 62 to rotate about the axis 55 and therefore the whole support device 60 to rotate about the axis 55. In this way, the rotation of the support device is possible only after the instrument WT has been positioned on the support device. The base wall and the rear wall of the device WT are respectively coupled with the beads 64a and 66a which, as a result of their raised free peripheral edges, enable the instrument WT to be disposed in a stable manner on the support device 60.

An operator may then rotate the support device 60 about the tubular member 54 by acting for instance on the wall 66 which is moved upwards by rotating the device WT about the axis 55 parallel to horizontal.

Once the required position for the instrument WT has been reached, the support device 60 is released while the plate 85 is disposed in the locking position preventing subsequent anticlockwise and free rotations of the device WT about the axis 55 with the displacement of the wall 66 from a higher to a lower position.

This makes it possible to achieve a plurality of stable angular arrangements of the support walls 66, 64 with respect to the second axis of rotation 55.

It is also possible to act on the push-button 97 in order to dispose the plate 85 in the moving position thereby enabling subsequent anticlockwise rotations of the device WT about the axis 55 with the displacement of the wall 66 from a higher to a lower position.

Once a predetermined orientation about the axis 48 has been reached, the operator acts on a handle M1 in order to lock, by means of a known device (not shown), the angular movement of the cylindrical member 47 about the tubular member 42.

The device WT may then be oriented freely in a three-dimensional space and disposed in the most convenient position for its use.

An operator, by pushing or pulling the arm 40, rotates the member 20 about its axis 49 thereby moving the support device closer to or away from the lateral opening 8 and therefore moving the device WT closer to or away from the vehicle 1.

Once a predetermined orientation about the axis 49 has been reached, the operator acts on a handle M2 in order to lock, by means of a device of known type (not shown), the angular movement of the tubular member 20 about the rectilinear member 17.

Similar operations can be carried out in order angularly to position the arm 40 borne by the second tubular member 28.

The advantages of the present invention are evident from the above description since the instrument holder device as described enables more than one diagnostic instrument WT to be readily and conveniently positioned with respect to the vehicle 1 that bears this instrument.

## Claims

1. An instrument holder device that can be mounted on a vehicle, comprising :
- first support means (15) having at least one portion (17a, 17b) adapted to be secured to the vehicle (1) and adapted to be disposed in the vicinity of an opening (8) of this vehicle,
- at least one elongate member (40) extending from the first support means (15) and having a first end portion (40a) which bears a support device (60) having second support means (66, 64) for supporting at least one instrument, in particular a diagnostic instrument,
- first relative positioning means (17, 20) defining at least a first axis of rotation (49) of the elongate member (40) with respect to the first support means (15), this first axis of rotation being disposed, in operation, substantially vertically in order to allow the second support means (66, 64) to be moved closer to or away from the opening (8);
the device further comprising second relative positioning means (42, 47; 54, 62) interposed between the first end portion (40a) of the elongate member (40) and the second support means (66, 64) **characterised in that** the second relativ positioning means (42, 47; 54, 62) allows the second support means (64, 66) to rotate with respect to the elongate member (40) about at least a second axis of rotation (48, 55),
said second relative positioning means (42, 47; 54, 62) enables the second support means (64, 66) to rotate with respect to a third axis of rotation (55) perpendicular to the second axis (48).

2. A device as claimed in claim 1, **characterised in that** the first support means (15) comprise:
- at least one rectilinear member (17) having at least one end portion (17a, 17b) adapted to be secured to the vehicle,
- at least one tubular member (20) mounted coaxially on the rectilinear member (17) and moving angularly with respect to this rectilinear member about the first axis of rotation (49).

3. A device as claimed in claim 2, **characterised in that** the elongate member comprises a rectilinear arm (40) extending from the tubular member (20).

4. A device as claimed in claim 1, **characterised in that** the second axis of rotation (48) is parallel to the first axis of rotation (49).

5. A device as claimed in any of the preceeding claims, **characterised in that** the second relative positioning means (42, 47) 5 comprise a first tubular member (42) connected to the elongate member (40) and a first inner member (47) disposed coaxially within the tubular member (42) and , moving angularly with respect to the second axis of rotation (48).

6. A device as claimed in claim 5 **characterised in that** the second relative positioning means (54, 62) comprise a second inner member (54) borne by the first inner member (47) and a second tubular 15 member (62) moving angularly with respect to the second inner member (54) about the third axis of rotation (55).

7. A device as claimed in claim 6, **characterised in that** the second support means (66, 64) comprise at least a 20 first wall (66) which extends from the second tubular member and a second wall (64) transverse to the first wall (66).

8. A device as claimed in any one of the preceedly claims **characterised in that** it comprises locking means adapted to enable a plurality of stable angular arrangements of the support means (66, 64) with respect to the second axis of rotation (55).

9. A device as claimed in claim 8, **characterised in that** the locking means comprise shock absorber means comprising a first portion (70a) coupled to a portion (74) of the second support means (64, 66) and a spindle (76) connected to an abutment portion (78) fixed with respect to the second axis of rotation (55), this spindle (76) being axially mobile during the rotation of the support means about the second axis of rotation (55) and these locking means comprising engaging means (85) of releasable type (97) adapted to enable and to prevent the axial displacement of the spindle (76) in at least one direction of axial displacement.

10. A device as claimed in any one of the preceeding claims, **characterised in that** it comprises means for preventing rotation (100) of releasable type adapted to prevent the angular movement of the support means with respect to the second axis of rotation (55) when an instrument is not disposed on the support means.

11. A device as claimed in claim 10, **characterised in that** the means for preventing rotation (100) comprise a hooking portion (101a) adapted to be coupled to a portion of the instrument in order to be moved under the weight of this instrument from a first position in which the second support means (66, 64) are rigid with an abutment portion (78) fixed with respect to the second axis of rotation (55) and'rotation about the second axis (55) is prevented and a second position in which the second support means (66, 64) are unconnected from the abutment portion (78) and rotation about the second axis is possible.

12. A device as claimed in any one of the preceding claims, **characterised in that** the support device (60) comprises at least one instrument holder bead (64a, 66a) comprising a plane rectangular portion having raised peripheral edges.

13. A vehicle, in particular a garage vehicle, comprising a bodywork provided with at least one opening (8), **characterised in that** it comprises an instrument holder device as claimed in any one of the preceding claims.

## Patentansprüche

1. Instrumenten-Halteeinrichtung, die an einem Fahrzeug anbringbar ist, mit:
- ersten Auflagemitteln (15) mit zumindest einem Bereich (17a, 17b), der an dem Fahrzeug (1) anbringbar ist und dazu ausgestaltet ist, in der Nähe einer Öffnung (8) dieses Fahrzeugs angeordnet zu werden,
- zumindest einem länglichen Element (40), das sich von den ersten Auflagemitteln (15) her erstreckt und einen ersten Endbereich (40a) hat, der eine Auflageeinrichtung (60) trägt mit zweiten Auflagemitteln (66, 64) zum Halten zumindest eines Instruments, insbesondere eines Diagnoseinstruments,
- einem ersten Mittel (17, 20) zur relativen Positionierung, das zumindest eine erste Drehachse (49) des länglichen Elements (40) bezüglich der ersten Auflagemittel (15) definiert, wobei diese erste Drehachse im Betrieb im wesentlichen vertikal angeordnet ist, so dass die zweiten Auflagemittel (66, 64) näher an die Öffnung (8) heran oder weiter davon weg bewegbar sind;
wobei die Einrichtung außerdem ein zweites Mittel (42, 47; 54, 62) zur relativen Positionierung aufweist, das zwischen dem ersten Endbereich (40a) des länglichen Elements (40) und den zweiten Auflagemitteln (66, 64) angeordnet ist, **dadurch gekennzeichnet, dass** das zweite Mittel (42, 47; 54, 62) zur relativen Positionierung eine Drehung des zweiten Auflagemittels (64, 66) bezüglich des länglichen Elements (40) um zumindest eine zweite Drehachse (48, 55) herum ermöglicht, wobei das zweite Mittel (42, 47; 54, 62) zur relativen Positionierung eine Drehung der zweiten Auflagemittel (64, 66) bezüglich einer dritten Drehachse (55) ermöglicht, die senkrecht zu der zweiten Achse (48) verläuft.

2. Einrichtung nach Anspruch 1, **dadurch gekennzeichnet, dass** die ersten Auflagemittel (15) zumindest ein geradliniges Element (17) aufweisen, das zumindest einen Endbereich (17a, 17b) hat, der an dem Fahrzeug anbringbar ist, und zumindest ein röhrenförmiges Element (20), das koaxial an dem geradlinigen Element (17) angebracht ist und winklig bezüglich dieses geradlinigen Elements um die erste Drehachse (49) herum beweglich ist.

3. Einrichtung nach Anspruch 2, **dadurch gekennzeichnet, dass** das längliche Element einen geradlinigen Arm (40) aufweist, der sich von dem röhrenförmigen Element (20) aus erstreckt.

4. Einrichtung nach Anspruch 1, **dadurch gekennzeichnet, dass** die zweite Drehachse (48) parallel zur ersten Drehachse (49) verläuft.

5. Einrichtung nach einem der vorangehenden Ansprüche, **dadurch gekennzeichnet, dass** das zweite Mittel (42, 47) zur relativen Positionierung ein erstes röhrenförmiges Element (42) aufweist, das mit dem länglichen Element (40) verbunden ist, und ein erstes inneres Element (47), das koaxial innerhalb des röhrenförmigen Elements (42) angeordnet ist und winklig bezüglich der zweiten Drehachse (48) beweglich ist.

6. Einrichtung nach Anspruch 5, **dadurch gekennzeichnet, dass** das zweite Mittel (54, 62) zur relativen Positionierung ein zweites inneres Element (54) aufweist, das von dem ersten inneren Element (47) getragen wird, und ein zweites röhrenförmiges Element (62), das winklig bezüglich des zweiten inneren Elements (54) um die dritte Drehachse (55) herum beweglich ist.

7. Einrichtung nach Anspruch 6, **dadurch gekennzeichnet, dass** die zweiten Auflagemittel (64, 66) zumindest eine erste Wand (66) aufweisen, die sich von dem zweiten röhrenförmigen Element aus erstreckt, und eine zweite Wand (64), die quer zu der ersten Wand (66) verläuft.

8. Einrichtung nach einem der vorangehenden Ansprüche, **dadurch gekennzeichnet, dass** die Einrichtung Verriegelungsmittel aufweist, die mehrere stabile winklige Anordnungen der Auflagemittel (66, 64) bezüglich der zweiten Drehachse (55) ermöglichen.

9. Einrichtung nach Anspruch 8, **dadurch gekennzeichnet, dass** die Verriegelungsmittel Stoßdämpfermittel aufweisen, die einen ersten Bereich (70a) aufweisen, der mit einem Bereich (74) der zweiten Auflagemittel (64, 66) verbunden ist, sowie eine Spindel (76), die mit einem Anschlagbereich (48) verbunden ist, der bezüglich der zweiten Drehachse (55) fixiert ist, wobei diese Spindel (76) während der Drehung der Auflagemittel axial um die zweite Drehachse (55) herum drehbar ist und diese Verriegelungsmittel Eingriffsmittel (75) der lösbaren Art (97) aufweisen, die die axiale Verschiebung der Spindel (76) in zumindest einer axialen Verschiebungsrichtung ermöglichen und verhindern können.

10. Einrichtung nach einem der vorangehenden Ansprüche, **dadurch gekennzeichnet, dass** die Einrichtung lösbare Mittel (100) zum Verhindern der Drehung aufweist, die dazu geeignet sind, die winklige Bewegung der Auflagemittel bezüglich der zweiten Drehachse (55) zu verhindern, wenn sich kein Instrument an dem Auflagemittel befindet.

11. Einrichtung nach Anspruch 10, **dadurch gekennzeichnet, dass** die Mittel (100) zum Verhindern der Drehung einen Hakenbereich (101a) aufweisen, der mit einem Bereich des Instruments koppelbar ist, um unter dem Gewicht dieses Instruments aus einer ersten Position, in welcher die zweiten Auflagemittel (66, 64) mit einem Anschlagbereich (78) starr verbunden sind, der bezüglich der zweiten Drehachse (55) fixiert ist, und eine Drehung um die zweite Achse (55) herum verhindert ist, in eine zweite Position bewegt zu werden, in welcher die zweiten Auflagemittel (66, 64) von dem Anschlagbereich (78) gelöst sind und eine Drehung um die zweite Achse herum möglich ist.

12. Einrichtung nach einem der vorangehenden Ansprüche, **dadurch gekennzeichnet, dass** die Auflageeinrichtung (60) zumindest einen Instrumentenhaltewulst (64a, 66a) aufweist, der einen ebenen rechteckigen Bereich mit angehobenen Umfangskanten aufweist.

13. Fahrzeug, insbesondere Garagenfahrzeug, mit einem Aufbau, der mit zumindest einer Öffnung (8) versehen ist, **dadurch gekennzeichnet, dass** das Fahrzeug eine Instrumenten-Halteeinrichtung nach einem der vorangehenden Ansprüche aufweist.

## Revendications

1. Dispositif porte-instruments qui peut être monté sur un véhicule, comprenant :
- un premier moyen de support (15) comportant au moins une portion (17a, 17b) adaptée pour être fixée au véhicule (1) et adaptée pour être placée au voisinage d'une ouverture (8) de ce véhicule,
- au moins un élément allongé (40) s'étendant du premier moyen de support (15) et présentant une première portion d'extrémité (40a) qui supporte un dispositif de support (60) comportant un deuxième moyen de support (66, 64) destiné à supporter au moins un instrument, en particulier un instrument de diagnostic,
- un premier moyen de positionnement relatif (17, 20) définissant au moins un premier axe de rotation (49) de l'élément allongé (40) par rapport au premier moyen de support (15), ce premier axe de rotation étant disposé, en fonctionnement, sensiblement verticalement afin de permettre le rapprochement ou l'écartement du deuxième moyen de support (66, 64) de l'ouverture (8) ;
le dispositif comprenant en outre un deuxième moyen de positionnement relatif (42, 47 ; 54, 62) interposé entre la première portion d'extrémité (40a) de l'élément allongé (40) et le deuxième moyen de support (66, 64),
**caractérisé en ce que** le deuxième moyen de positionnement relatif (42, 47 ; 54, 62) permet de faire tourner le deuxième moyen de support (64, 66) par rapport à l'élément allongé (40) autour d'au moins un deuxième axe de rotation (48, 55),
ledit deuxième moyen de positionnement relatif (42, 47 ; 54, 62) permettant de faire tourner le deuxième moyen de support (64, 66) par rapport à un troisième axe de rotation (55) perpendiculaire au deuxième axe (48).

2. Dispositif selon la revendication 1, **caractérisé en ce que** le premier moyen de support (15) comprend :
- au moins un élément rectiligne (17) présentant au moins une portion d'extrémité (17a, 17b) adaptée pour être fixée au véhicule,
- au moins un élément tubulaire (20) monté coaxialement à l'élément rectiligne (17) et se déplaçant angulairement par rapport à cet élément rectiligne autour du premier axe de rotation (49).

3. Dispositif selon la revendication 2, **caractérisé en ce que** l'élément allongé comprend un bras rectiligne (40) s'étendant depuis l'élément tubulaire (20).

4. Dispositif selon la revendication 1, **caractérisé en ce que** le deuxième axe de rotation (48) est parallèle au premier axe de rotation (49).

5. Dispositif selon l'une des revendications précédentes, **caractérisé en ce que** le deuxième moyen de positionnement relatif (42,47) comprend un premier élément tubulaire (42) relié à l'élément allongé (40) et un premier élément intérieur (47) agencé coaxialement à l'intérieur de l'élément tubulaire (42) et se déplaçant angulairement par rapport au deuxième axe de rotation (48).

6. Dispositif sur la revendication 5, **caractérisé en ce que** le deuxième moyen de positionnement relatif (54, 62) comprend un deuxième élément intérieur (54) supporté par le premier élément intérieur (47) et un deuxième élément tubulaire (62) se déplaçant angulairement par rapport au deuxième élément intérieur (54) autour du troisième axe de rotation (55).

7. Dispositif selon la revendication 6, **caractérisé en ce que** le deuxième moyen de support (66, 64) comprend au moins une première paroi (66) qui s'étend depuis le deuxième élément tubulaire et une deuxième paroi (64) transversale à la première paroi (66).

8. Dispositif selon l'une quelconque des revendications précédentes, **caractérisé en ce qu'**il comprend un moyen de verrouillage adapté pour permettre une pluralité d'arrangements angulaires stables du moyen de support (66, 64) par rapport au deuxième axe de rotation (55).

9. Dispositif selon la revendication 8, **caractérisé en ce que** le moyens de verrouillage comprend une moyen d'absorption de choc comprenant une première portion (70a) couplée à une portion (74) du deuxième moyen de support (64, 66) et une broche (76) reliée à une portion de butée (78) fixe par rapport au deuxième axe de rotation (55), cette broche (76) étant mobile axialement pendant la rotation du moyen de support autour du deuxième axe de rotation (55) et ce moyens de verrouillage comprenant un moyen d'engagement (85) du type libérable (97) adapté pour permettre et pour empêcher le déplacement axial de la broche (76) dans au moins une direction de déplacement axial.

10. Dispositif selon l'une quelconque des revendications précédentes, **caractérisé en ce qu'**il comprend une moyen pour empêcher la rotation (100) du type libérable adapté pour empêcher le mouvement angulaire du moyen de support par rapport au deuxième axe de rotation (55) lorsqu'un instrument n'est pas placé sur le moyen de support.

11. Dispositif selon la revendication 10, **caractérisé en ce que** le moyen pour empêcher la rotation (100) comprend une portion d'accrochage (101a) adaptée pour être couplée à une portion de l'instrument afin d'être déplacée sous le poids de cet instrument depuis une première position dans laquelle le deuxième moyen de support (66, 64) est solidaire d'une portion de butée (78) fixe par rapport au deuxième axe de rotation (55) et la rotation autour du deuxième axe (55) est empêchée et une deuxième position dans laquelle le deuxième moyen (66, 64) est déconnecté de la portion de butée (78) et la rotation du deuxième axe est possible.

12. Dispositif selon l'une quelconque des revendications précédentes, **caractérisé en ce que** le dispositif de support (60) comprend au moins une nervure de renforcement de porte-instruments (64a, 66a) comprenant une portion rectangulaire plane présentant des bords périphériques soulevés.

13. Véhicule, en particulier véhicule de garage, comprenant une carrosserie dotée d'au moins une ouverture (8), **caractérisé en ce qu'**il comprend un dispositif porte-instrument selon l'une quelconque des revendications précédentes.
